# EUROPÄISCHE PATENTSCHRIFT

(11) **EP 2 239 390 B1**
(45) Veröffentlichungstag und Bekanntmachung des Hinweises auf die Patenterteilung: **01.04.2015**
(21) Anmeldenummer: 10158976.0
(22) Anmeldetag: 01.04.2010
(51) Int. Cl.: E04B 9/20, F16B 21/09

(54) **Abhänger**
Hanger
Suspente

(30) Priorität: 07.04.2009 DE 202009004679 U
(43) Veröffentlichungstag der Anmeldung: 13.10.2010
(73) Patentinhaber: Georg Kimmel GmbH, 41069 Mönchengladbach (DE)
(72) Erfinder: Fuhrmann, Günter, 41238, Mönchengladbach (DE)
(74) Vertreter: DR. STARK & PARTNER

(56) Entgegenhaltungen:
- EP-A1- 1 916 351
- DE-A1- 3 539 373
- DE-B- 1 215 334
- US-A1- 2004 111 995

## Beschreibung

Die Erfindung betrifft einen Abhänger mit einem Basisteil, an dem eine in etwa U-förmig ausgebildete Federklemme mit zwei Längsschenkeln und einem die Anfangsbereiche der Längsschenkel miteinander verbindenden Mittelbereich, wobei jeder Längsschenkel etwa im mittleren Bereich eine Durchgangsöffnung für einen durch beide Durchgangsöffnungen durchführbaren stiftförmigen Gegenstand, insbesondere einen Stift, einen Stab, einen Draht oder dergleichen, aufweist, der bei federnd verformten, insbesondere zusammengedrückten, Längsschenkeln eingeführt und nach Freigabe der Längsschenkel klemmend von diesen gehalten wird.

Derartige Abhänger werden beispielsweise zur Montage einer Unterdecke oder einer Unterkonstruktion unter einer Raumdecke verwendet. Bei bekannten Abhängern ist die Federklemme an dem Basisteil beispielsweise durch Vernieten befestigt. Um ein Verdrehen der Federklemme gegenüber dem Basisteil zu verhindern, sind zur Befestigung dabei zwei Nietverbindungen erforderlich. Damit ist die Federklemme über einem großen Bereich starr mit dem Basisteil verbunden. Wird beim Zusammendrücken der Längsschenkel zum Zwecke des Einführens eines stiftförmigen Gegenstandes zu viel Kraft auf die Längsschenkel aufgebracht, kann die Federklemme leicht plastisch verformt werden, so dass damit der Abhänger nicht mehr verwendbar ist.

EP 1916351 A1 enthält alle technischen Merkmale des einleitenden Teils des ersten Anspruchs.

Aufgabe der Erfindung ist es, die vorgenannten Nachteile zu vermeiden und einen Abhänger anzugeben, dessen Federklemme nicht so leicht plastisch verformbar ist und der gleichzeitig einfach herstellbar ist.

Diese Aufgabe wird durch die Merkmale des Anspruchs 1 gelöst. Durch die erfindungsgemäße Ausgestaltung ist die Federklemme in der Fixierposition mit den Längsschenkeln nur durch die beiden Ausnehmungen geführt. Dadurch ist die Federklemme nicht starr mit dem Basisteil verbunden. Dies hat zur Folge, dass sich die Feder im Bereich des Mittelbereiches mit zunehmender Kraftbeaufschlagung aufwerfen kann, so dass keine plastische sondern eine elastische Verformung der Längsschenkel eintritt. Hinzukommt, dass durch die erfindungsgemäße Ausgestaltung die Breite des Mittelbereiches deutlich reduziert werden kann. Der Mittelbereich kann beispielsweise halbkreisförmig ausgebildet sein. Er kann aber auch eine einzige scharfe Knickstelle darstellen, so dass dann die Federklemme eine etwa V-förmige Ausgestaltung annimmt.

Die beiden Längsschenkel können zueinander winklig angeordnet, und insbesondere auch gegenüber dem Mittelbereich abgewinkelt ausgebildet, sein. Die Längsschenkel der Federklemme sind vorzugsweise in einem Winkel von etwa 45 bezogen auf die generelle Erstreckung des Basisteils in der Fixierposition ausgerichtet. Dabei können die beiden Längsschenkel entweder aufeinander zuweisend oder voneinander wegweisend ausgerichtet sein.

Die Federklemme weist zumindest im Anfangsbereich der Längsschenkel entlang wenigstens einer Längskante seitliche Rastausnehmungen auf. Die Rastausnehmungen können beispielsweise eine halbkreisförmige Ausgestaltung aufweisen.

Für die Fixierung der Federklemme an dem Basisteil in der Fixierposition weist zumindest eine schlitzförmige Ausnehmung zwei unterschiedlich breite Teilbereiche auf, von denen der breitere Teilbereich leicht breiter ist als der Längsschenkel und der schmalere Teilbereich zumindest leicht schmaler ist als der Längsschenkel im nicht um eine Rastausnehmung reduzierten Bereich und breiter ist als der Längsschenkel im um die Rastausnehmung reduzierten Bereich. Dadurch, dass der Längsschenkel in der Fixierposition mit dem um die Rastausnehmung reduzierten Bereich in den schmaleren Teilbereich eingreift, wird ein unbeabsichtigtes Lösen der Federklemme gegenüber dem Basisteil verhindert.

Sofern die breiteren Teilbereiche in dem der jeweils anderen Ausnehmung zugewandten Seitenbereich der Ausnehmung vorgesehen sind, hat dies zur Folge, dass durch Zusammendrücken der Längsschenkel einer Federklemme mit voneinander wegweisend ausgerichteten Längsschenkeln die Längsschenkel aus denen Ausnehmungen geführt werden können.

Sofern eine Befestigung realisiert werden soll, die ohne Hilfsmittel nur schwer lösbar ist, bietet sich an, wenn die breiteren Teilbereiche in den der jeweils anderen Ausnehmung abgewandten Seitenbereichen der Ausnehmung vorgesehen sind.

Im Folgenden wird ein in den Zeichnungen dargestelltes Ausführungsbeispiel der Erfindung erläutert. Es zeigen:
- Fig. 1: eine Draufsicht auf einen Teil eines Basiselementes,
- Fig. 2: eine Draufsicht auf eine abgewickelte Federklemme und
- Fig. 3: eine Seitenansicht auf einen erfindungsgemäßen Abhänger

In allen Figuren werden für gleiche bzw. gleichartige Bauteile übereinstimmende Bezugszeichen verwendet.

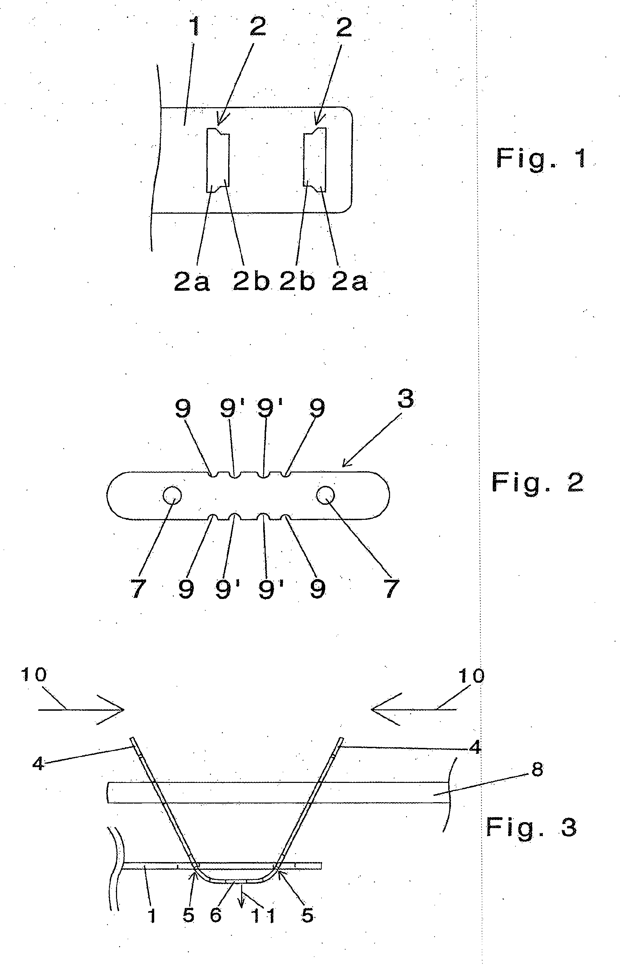

Figur 1 zeigt ein Basisteil 1, dass zwei in etwa schlitzförmige Ausnehmungen 2 aufweist. Die Ausnehmungen 2 weisen zwei unterschiedlich breite Teilbereiche auf, nämlich einen breiten Teilbereich 2a und einen angrenzenden schmaleren Teilbereich 2b.

Wie deutlich in Figur 1 zu entnehmen ist, sind die breiteren Teilbereiche 2b beider Ausnehmungen 2 in dem der jeweils anderen Ausnehmung 2 abgewandten Seitenbereich der Ausnehmung 2 vorgesehen. Demzufolge sind die schmaleren Teilbereiche 2a in dem der jeweils anderen Ausnehmung 2 zugewandten Seitenbereich der Ausnehmung 2 vorgesehen.

Figur 2 zeigt eine erfindungsgemäße Federklemme 3 mit zwei Längsschenkeln 4 und einem die Anfangsbereiche 5 der Längsschenkel 4 miteinander verbindenden Mittelbereich 6.

Jeder Längsschenkel 4 weist etwa im mittleren Bereich eine Durchgangsöffnung 7 für einen durch beide Durchgangsöffnungen 7 durchführbaren stiftförmigen Gegenstand 8 auf.

Figur 2 zeigt die Federklemme 3 im abgewinkelten Zustand. In Figur 3 ist die Federklemme 3 bereits im an dem Basisteil 1 montierten Zustand dargestellt. Deutlich erkennbar sind die abgewinkelten Längsschenkel 4 und der die Anfangsbereiche 5 der Längsschenkel 4 miteinander verbindende Mittelbereich 6. In dem dargestellten Ausführungsbeispiel ist der Mittelbereich 6 im Wesentlichen flach ausgebildet. Er kann aber auch halbkreisförmig oder trapezförmig sein. Der Mittelbereich 6 kann aber auch als einzige scharfe Knickstelle ausgebildet sein.

Deutlich erkennbar ist, dass an den beiden Längskanten im Anfangsbereich 5 jedes Längsschenkels 4 halbkreisförmig ausgebildete Rastausnehmungen 9, 9' vorgesehen sind. Bei dem in Figur 2 dargestellten Ausführungsbeispiel sind auf jeder Seite insgesamt vier Rastausnehmungen 9, 9' vorgesehen. Die Rastausnehmungen 9 sind für die Befestigung der Federklemme 3 an einem Basisteil 1 mit den in den Figuren 1 und 3 dargestellten Abmessungen vorgesehen.

Nach Abwinkeln der Längsschenkel 4 der Federklemme 3 in die in Figur 3 dargestellte Ausrichtung werden die Längsschenkel 4 in die beiden Ausnehmungen 2 eingeführt. In der endgültigen Fixierposition, sowie es in Fig. 3 dargestellt ist, rastet jeder Längsschenkel 4 mit seinem die Rastausnehmung 9 reduzierten Bereich in den schmaleren Teilbereich 2b ein.

Die Rastausnehmungen 9' sind zur Verwendung der Federklemme 3 mit einem Basisteil 1, bei dem die zwei schlitzförmigen Ausnehmungen 2 in einem geringeren Abstand zueinander angeordnet sind, vorgesehen. Nach Abwinkeln der Längsschenkel 4 der Federklemme 3 ist der Mittelbereich 6 schmaler.

Die erfindungsgemäße Ausgestaltung verhindert, dass die Längsschenkel 4 der Federklemme 3 beim Einführen des Gegenstandes 8 nur sehr schwer plastisch verformt werden, sofern zum Einführen des Gegenstandes 8 in die Durchgangsöffnungen 7 beim Zusammendrücken (Pfeile 10) auf die beiden Längsschenkel eine zu große Kraft aufgebracht wird. Denn so wirft sich die Federklemme 3 im Mittelbereich 6 in Richtung des Pfeiles 10 mit zunehmender Kraft auf, da keine starre Verbindung besteht.

## Patentansprüche

1. Abhänger mit einem Basisteil (1), an dem eine in etwa U-förmig ausgebildete Federklemme (3) mit zwei Längsschenkeln (4) und einem die Anfangsbereiche (5) der Längsschenkel (4) miteinander verbindenden Mittelbereich (6), wobei jeder Längsschenkel (4) etwa im mittleren Bereich eine Durchgangsöffnung (7) für einen durch beide Durchgangsöffnungen (7) durchführbaren stiftförmigen Gegenstand (8), insbesondere einen Stift, einen Stab, einen Draht oder dergleichen, aufweist, der bei federnd verformten, insbesondere zusammengedrückten, Längsschenkeln (4) eingeführt und nach Freigabe der Längsschenkel (4) klemmend von diesen gehalten wird, das Basisteil (1) weist zwei in etwa schlitzförmige und in etwa entsprechend der Breite des Mittelbereichs (6) voneinander beabstandet angeordnete Ausnehmungen (2) auf, durch die die beiden Längsschenkel (4) der Federklemme (3) zur Befestigung der Federklemme (3) an dem Basisteil (1) führbar sind, die Federklemme (3) weist zumindest im Anfangsbereich (5) der Längsschenkel (4) entlang wenigstens einer Längskante seitliche Rastausnehmungen (9, 9') auf, **dadurch gekennzeichnet, dass** für die Fixierung der Federklemme (3) an dem Basisteil (1) zumindest eine schlitzförmige Ausnehmung (2) zwei unterschiedlich breite Teilbereiche (2a, 2b) aufweist, von denen der breitere Teilbereich (2a) leicht breiter ist als der Längsschenkel (4) und der schmalere Teilbereich (2b) zumindest leicht schmaler ist als der Längsschenkel (4) und breiter ist als der Längsschenkel (4) im um die Rastausnehmung(en) (9, bzw. 9') reduzierten Bereich.

2. Abhänger nach dem vorhergehenden Anspruch, **dadurch gekennzeichnet, dass** die beiden Längsschenkel (4) zueinander winklig angeordnet, und insbesondere auch gegenüber dem Mittelbereich (6) abgewinkelt ausgebildet, sind.

3. Abhänger nach einem der vorhergehenden Ansprüche, **dadurch gekennzeichnet, dass** die breiteren Teilbereiche (2a) in den der jeweils anderen Ausnehmung (2) zugewandten Seitenbereichen der Ausnehmung (2) vorgesehen sind.

4. Abhänger nach einem der vorhergehenden Ansprüche, **dadurch gekennzeichnet, dass** die breiteren Teilbereiche (2a) in den der jeweils anderen Ausnehmung (2) abgewandten Seitenbereichen der Ausnehmung (2) vorgesehen sind.

## Claims

1. Hanger with a base part (1) on which an approximately U-shaped spring clip (3) with two longitudinal arms (4) and one central area (6) connecting the starting areas (5) of the longitudinal arms (4) to each other, wherein each longitudinal arm (4) has in the central area a passage opening (7) for a pin-shaped article (8) which can be fed through both passage openings (7), in particular a pin, a rod, a wire or such like, which is inserted when the longitudinal arms (4) are flexibly deformed, in particular pressed together, and after the release of the longitudinal arms (4) are held tight by them, the base part (1) has two recesses (2) arranged at a distance from each other in a shape of a slot according to the width of the central area (6), wherein the two longitudinal arms (4) of the spring clip (3) can be fed through said recesses to secure the spring clip (3) on the base part (1), the spring clip (3) has lateral locking recesses (9, 9') at least in the starting area (5) of the longitudinal arms (4) along at least one longitudinal edge, **characterised in that**, to secure the spring clip (3) on the base part (1) at least one slot-shaped recess (2) has two partial areas (2a, 2b) of different widths, the wider partial area (2a) of which is slightly wider than the longitudinal arm (4) and the narrower partial area (2b) of which is at least slightly narrower than the longitudinal arm (4) and is wider than the longitudinal arm (4) in the reduced area around the locking recess(es) (9 and 9').

2. Hanger according to claim 1, **characterised in that** the two longitudinal arms (4) are arranged at an angle to each other, and in particular are also formed at an angle relative to the central area (6).

3. Hanger according to any one of the preceding claims, **characterised in that** the wider partial areas (2a) are provided in the lateral areas of the recess (2) turned towards the other recess (2) in each case.

4. Hanger according to any one of the preceding claims, **characterised in that** the wider partial areas (2a) are provided in the lateral areas of the recess (2) turned away from the other recess (2) in each case.

## Revendications

1. Suspente munie d'une partie de base (1) sur laquelle une pince élastique (3) réalisée avec configuration sensiblement en U, comprenant deux branches longitudinales (4) et une région médiane (6) reliant, l'une à l'autre, les zones initiales (5) desdites branches longitudinales (4), chaque branche longitudinale (4) comportant, sensiblement dans la zone centrale, un orifice de passage (7) destiné à un objet longiligne (8) se présentant en particulier comme une broche, une tige, un fil métallique ou un objet similaire qui peut être engagé à travers les deux orifices de passage (7) et est inséré lorsque les branches longitudinales (4) sont déformées élastiquement, notamment comprimées, puis est retenu par lesdites branches longitudinales (4), avec effet de coincement, à l'issue du relâchement de ces dernières, la partie de base (1) étant dotée de deux évidements (2) sensiblement en forme de fentes, situés à distance l'un de l'autre, correspondant sensiblement à la largeur de la région médiane (6), et par l'intermédiaire desquels les deux branches longitudinales (4) de la pince élastique (3) peuvent être guidées en vue de fixer ladite pince élastique (3) à ladite partie de base (1), ladite pince élastique (3) étant pourvue d'évidements latéraux de crantage (9, 9') au moins dans la zone initiale (5) des branches longitudinales (4), le long d'au moins une arête longitudinale, **caractérisée par le fait que**, pour assurer la consignation à demeure de la pince élastique (3) sur la partie de base (1), au moins un évidement (2) en forme de fente comprend deux régions partielles (2a, 2b) de largeurs différentes, parmi lesquelles la région partielle (2a) de largeur supérieure est légèrement plus large que la branche longitudinale (4), et la région partielle (2b) de largeur inférieure est au moins légèrement plus étroite que ladite branche longitudinale (4), et plus large que ladite branche longitudinale (4) dans la zone réduite entourant l'évidement ou les évidements de crantage (9, respectivement 9').

2. Suspente selon la revendication précédente, **caractérisée par le fait que** les deux branches longitudinales (4) décrivent un angle l'une par rapport à l'autre et sont également, en particulier, de réalisation coudée l'une vis-à-vis de l'autre dans la région médiane (6).

3. Suspente selon l'une des revendications précédentes, **caractérisée par le fait que** les régions partielles (2a), de largeur supérieure, sont prévues dans les zones latérales de l'évidement (2) qui pointent vers l'autre évidement (2) respectif.

4. Suspente selon l'une des revendications précédentes, **caractérisée par le fait que** les régions partielles (2a), de largeur supérieure, sont prévues dans les zones latérales de l'évidement (2) qui sont tournées à l'opposé de l'autre évidement (2) respectif.
